# EUROPÄISCHE PATENTANMELDUNG

(11) **EP 3 276 511 A1**
(43) Veröffentlichungstag der Anmeldung: **31.01.2018**
(21) Anmeldenummer: 16181457.9
(22) Anmeldetag: 27.07.2016
(51) Int. Cl.: G06F 17/50, B29C 47/08

(54) **HERSTELLUNG VON EXTRUDERN UMFASSEND DEREN AUTOMATISIERTE AUSLEGUNG**

(71) Anmelder: Covestro Deutschland AG, 51373 Leverkusen (DE)
(72) Erfinder: König, Thomas, 51375 Leverkusen (DE); Bierdel, Michael, 51373 Leverkusen (DE)
(74) Vertreter: Levpat

(57) **Zusammenfassung**

Die vorliegende Erfindung betrifft ein Verfahren zur Herstellung von Extrudern und nach diesem Verfahren hergestellte Extruder, insbesondere Doppelschneckenextruder. Das erfindungsgemäße Verfahren umfasst die automatisierte Auslegung dieser Extruder, wiederum umfassend die Schritte:
(I) Berechnung des Extruders,
(II) Fertigung des in Schritt (I) berechneten Extruders,
wobei Schritt (I) ein mathematisches Optimierungsverfahren umfasst.

## Beschreibung

Die vorliegende Erfindung betrifft ein Verfahren zur Herstellung von Extrudern und nach diesem Verfahren hergestellte Extruder, insbesondere Doppelschneckenextruder, umfassend die automatisierte Auslegung dieser Extruder.

Zur Zeit werden eine Vielzahl von polymeren Werkstoffen und Zubereitungen von Polymeren zur weiteren Verwendung beispielsweise als Pellets mittels Extrudern hergestellt. Eine besondere Bedeutung kommt dabei den Schneckenextrudern zu. Schneckenextruder werden beispielsweise bei der Herstellung, Aufbereitung und/oder Verarbeitung - nachfolgend zusammenfassend Verarbeitung genannt - von Produkten wie insbesondere Polymeren, aber auch von Lebensmitteln eingesetzt. Dabei hat die dicht kämmende Doppelschneckenwelle mit gleichsinnig drehenden Wellen eine dominante Stellung unter den Extrudern eingenommen. Ein wesentlicher Vorteil der dicht kämmenden Gleichdralldoppelschneckenwelle gegenüber den einwelligen Maschinen besteht darin, dass sich die Schneckenelemente paarweise bis auf die notwendigen Spiele exakt abschaben und damit gegenseitig reinigen. Dadurch wird verhindert, dass Polymerschmelzen an Oberflächen anhaften und unter üblichen Verarbeitungstemperaturen mit der Zeit degradieren. Schneckenextruder sind dem Fachmann bekannt aus der ausführlichen Beschreibung in K. Kohlgrüber, Der gleichläufige Doppelschneckenextruder, Hanser Verlag, 2007 [1]. In dieser Veröffentlichung werden der Aufbau, die Funktion und der Betrieb von Zwei- und Mehrwellenextrudern ausführlich erläutert.

Eine besondere technische Herausforderung bei der Verarbeitung von Polymeren mittels Extrudern besteht darin, einen möglichst hohen Durchsatz eines Polymers zu erreichen. Ein hoher Durchsatz bedingt allerdings hohe Drehgeschwindigkeiten der Extruderwellen und das Einwirken von hohen Kräften auf die Polymere. Dadurch können zumindest lokal und temporär so hohe Temperaturen entstehen, dass thermische Schädigungen an den Polymeren hervorgerufen werden können. Thermische Schädigungen treten beispielsweise als Verfärbung des Polymers, Rückspaltung von Monomeren, Abspaltung von anderen niedermolekularen Substanzen, Veränderungen im Molekulargewicht, Vernetzung/Verzweigung, Bildung von Inhomogenitäten wie Stippen oder Gel oder auch Reaktion mit anderen im Prozess vorhandenen Stoffen auf. Damit haben thermische Schädigungen einen negativen Einfluss auf die gewünschte Produktqualität. Als Maß für diese thermische Schädigung des Produkts - nachfolgend Produktschädigung genannt - kann der sogenannte Yellowness Index (YI) dienen; dieser ist beispielsweise in der ASTM E313-00 definiert.

Handelt es sich bei dem Extruder beispielsweise um einen Entgasungsextruder, hat dieser darüber hinaus den Zweck, bei der Entgasung von Polymerschmelzen die Restgehalte von Monomeren und Lösungsmitteln zu minimieren; als Zweck eines Entgasungsextruders kann also die Minimierung dieser Restgehalte angesehen werden. Eine ausführliche Beschreibung von Entgasungsextrudern ist in [1], Seiten 191 bis 212 zu finden.

Handelt es sich bei dem Extruder bespielweise um einen Compoundierextruder, in dem dem Polymer Additive zugeben werden, hat dieser den Zweck, eine möglichst hohe Misch- und Dispergiergüte zu erreichen, um beispielsweise eine höhere Farbhomogenität und Oberflächengüte des additivierten Polymers bewirken zu können; als Zweck eines Compoundierextruders kann also eine möglichst hohe Misch- und Dispergiergüte angesehen werden. Die Farbhomogenität kann dabei beispielsweise bestimmt werden, indem aus dem additivierten Polymer durch Spritzguss Musterplättchen hergestellt werden, die von besonders geschultem Personal bewertet werden; die Oberflächengüte kann dabei beispielsweise bestimmt werden, indem aus dem additivierten Polymer durch Spritzguss Musterplatten hergestellt werden, die bezüglich ihrer Oberflächenrauigkeit vermessen werden.

Ziel der Entwicklung von Extrudern für die Verarbeitung von Polymeren ist es daher, den Durchsatz des Polymers zu erhöhen und dabei gleichzeitig einerseits den Zweck des jeweiligen Extruders zu erreichen und andererseits eine Produktschädigung zu verringern. Bei dieser Optimierung kommt der Auslegung des Extruders bei ansonsten festgelegten Prozess- und Produktparametern eine entscheidende Bedeutung zu.

Aus wirtschaftlichen Gründen ist es allerdings nicht sinnvoll, für eine solche Optimierung eines Extruders für ein Extrusionsverfahren eine Vielzahl von verschiedenen Schneckenextrudern herzustellen, um diese in aufwändigen Experimenten mit teuren Rohstoffen auf ihre Güte zu testen. Der Aufwand für die Herstellung der Extruder, die Beschaffung der Rohstoffe und auch für die Entsorgung der bei den Experimenten anfallenden Abfälle sind hier als entscheidende wirtschaftliche Gründe zu nennen. Durch die Optimierung mit Hilfe von Simulationen am Computer lassen sich aber solche Experimente bis zu einem bestimmten Grad vermeiden. Daher spielen Simulationen bei der Optimierung von Schneckenextrudern und Extrusionsverfahren eine zunehmend wichtige Rolle.

Zwar beschreibt EP 2 000 283 A9 eine Vorrichtung und ein Programm zur Simulation der Entgasung von flüchtigen Komponenten in einem Extruder, aber sie offenbart nicht, wie ein Extruder selbst berechnet werden kann.

Daher stellt die vorliegende Erfindung folgendes zur Verfügung:
Ein Verfahren zur Herstellung eines Extruders mit mindestens einer Welle, umfassend die Schritte:
   (I) Berechnung des Extruders,
   (II) Fertigung des in Schritt (I) berechneten Extruders,
   wobei Schritt (I) ein mathematisches Optimierungsverfahren umfasst, umfassend die folgenden Schritte:
   (1) Grundauslegung des Extruders, umfassend die folgenden Schritte:
      (a) Festlegung des zu extrudierenden Produkts,
      (b) Wahl der Zugabe des zu extrudierenden Produkts,
      (c) Wahl der Verfahrenszonen und deren Reihenfolge im Extruder, umfassend die folgenden Schritte:
         (I.) Wahl der Gehäusekonfiguration,
         (II.) Wahl der Schneckenkonfiguration,
      (d) Optional Optimierung einzelner Schneckenelemente,
      (e) Wahl der Prozessparameter,
      (f) Optional Anpassen der Prozessparameter,
      (g) Berechnung eines Entgasungsprozesses mit den Zielgrößen Restgehalt und/oder Austrittstemperatur und/oder Produktschädigung oder Berechnung eines Compoundierprozesses mit den Zielgrößen benötigtes Drehmoment und/oder Mischgüte und/oder Dispergiergüte und/oder Austrittstemperatur und/oder Produktschädigung, bevorzugt mittels eines computergestützten Rechenprogramms,
      (h) Wiederholen der Schritte (b), (c), (d), (f), (g) oder der Schritte (c), (d), (f), (g) oder der Schritte (d), (f), (g) oder der Schritte (f), (g) bis die Zielgrößen im geforderten Bereich liegen,
   (2) Detaillierte Auslegung des Extruders.

Mit diesem Verfahren kann ein Extruder derart an die Herstellungsparameter von Polymeren angepasst werden, dass bei der Verarbeitung von Polymeren mit diesem Extruder in entsprechenden Verfahren der Durchsatz des Polymers erhöht und dabei gleichzeitig einerseits der Zweck des jeweiligen Extruders erreicht und andererseits die Produktschädigung verringert werden kann.

Die einzelnen Schritte und Teilschritte des erfindungsgemäßen Verfahrens werden erfindungsgemäß vorzugsweise in der genannten Reihenfolge durchlaufen. Jedoch ist es erfindungsgemäß auch möglich, die einzelnen Schritte und insbesondere Teilschritte des erfindungsgemäßen Verfahrens in einer anderen Reihenfolge zu durchlaufen.

Das erfindungsgemäße Verfahren gliedert sich in die Schritte (I) Berechnung des Extruders und (II) Fertigung des in Schritt (I) berechneten Extruders. Dabei wird im Rahmen der vorliegenden Erfindung unter der Berechnung in Schritt (I) wie im Stand der Technik üblich gemeinhin eine Simulation verstanden, die mittels eines Computers und üblicher Ausgabegeräte durchgeführt wird.

Im folgenden sollen die Teilschritte (a) bis (h) des Schrittes (I) des erfindungsgemäßen Verfahrens beschrieben werden.

Mit der Festlegung des Produkts in Schritt (a) ist die Bestimmung desjenigen Polymers oder Polymergemisches gemeint, das im auszulegenden Extruder verarbeitet werden soll.

Polymere oder Polymergemische, die als Produkte mit einem Entgasungsextruder verarbeitet werden können, sind beispielsweise Kautschuke oder Thermoplaste mit deren Monomeren und/oder Lösungsmitteln. Bevorzugt werden mit einem Entgasungsextruder Lösungen von Polymeren ausgewählt aus der Reihe umfassend Styrolacrylnitrilcopolymer mit Styrol, Acrylnitril und/oder Ethylbenzol, Acrylnitrilbutadienstyrolblockcopolymere mit Styrol, Acrylnitril, Butadien und/oder Ethylbenzol, Polycarbonat mit Chlorbenzol und/oder Methylenchlorid, Polyamid mit Caprolactam oder Wasser, Polyoxymethylen mit Formaldehyd, Poly(methyl)methacrylat mit Methylmethacrylat und Polyethylen mit Hexan oder Cyclohexan verarbeitet. Besonders bevorzugt wird ein Entgasungsextruder zur Verarbeitung von Polymerlösungen enthaltend Polycarbonat in Chlorbenzol und/oder Methylenchlorid eingesetzt.

In einem Entgasungsextruder dient eine gasförmige Phase als sogenanntes Schleppmittel in einer einer Dispergierzone nachgeschalteten Entgasungszone. Das Schleppmittel führt zum einen zu einem (verbesserten) Aufschäumen der Polymerschmelze mit entsprechend größeren freien Entgasungsoberflächen und zum anderen zu einer Partialdruckerniedrigung der zu entgasenden Flüchtigen (Monomere, Oligomere, Lösungsmittel). Als Schleppmittel sind beispielsweise Wasser, Kohlendioxid oder Stickstoff bekannt.

Während der Verarbeitung von Thermoplasten und Kautschuken, insbesondere von Thermoplasten oder deren Blends, in einem Entgasungsextruder, werden den Thermoplasten bzw. Kautschuken häufig Additive beigemengt. Diese werden als Feststoffe, Flüssigkeiten oder Lösungen im Regelfall nach der letzten Entgasungszone dem Extruder über einen Seitenstrom zugeführt.

Additive können einem Polymer vielfältige Eigenschaften verleihen. Beispiele für solche Additive sind Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidantien wirksame Benzofurane und Indolinone, Formtrennmittel, flammhemmende Additive, antistatische Mittel, Färbemittel oder Schmelzestabilisatoren.

Produkte, die mit einem Compoundierextruder verarbeitet werden können, sind beispielsweise Polymere wie Thermoplaste oder Kautschuke, besonders bevorzugt Thermoplaste. Ferner ist bekannt, dass auf einen Compoundierextruder Suspensionen, Pasten, Glasschmelzen, Metallschmelzen, keramische Massen oder Lebensmittel verarbeitet werden können.

Besonderes bevorzugt werden mit einem Compoundierextruder thermoplastische Polymere aus der Reihe umfassend Polycarbonat, Polyamid, Polyester, insbesondere Polybutylenterephthalat oder Polyethylenterephthalat, Polyether, thermoplastisches Polyurethan, Polyacetal, Fluorpolymer, insbesondere Polyvinylidenfluorid, Polyethersulfone, Polyolefin, insbesondere Polyethylen oder Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere oder Polyvinylchlorid verarbeitet. Ebenso bevorzugt werden mit einem Compoundierextruder so genannte Blends aus den aufgeführten Polymeren verarbeitet, worunter der Fachmann eine Kombination aus zwei oder mehreren Polymeren versteht. Besonders bevorzugt sind Polycarbonat und Blends enthaltend Polycarbonat, wobei das Polycarbonat ganz besonders bevorzugt nach dem Phasengrenzflächenverfahren oder dem Schmelzeumesterungsverfahren erhalten wurde.

Weitere Polymere, die mit einem Compoundierextruder verarbeitet werden können, sind Kautschuke. Als Kautschuk wird bevorzugt wenigstens einer aus der Reihe umfassend Styrol-Butadien-Kautschuk, Naturkautschuk, Butatiden-Kautschuk, Isopren-Kautschuk, Ethylen-Propylen-DienKautschuk, Ethylen-Propylen-Kautschuk, Butadien-Acrylnitril-Kautschuk, hydrierter Nitrilkautschuk, Butylkautschuk, Halobutylkautschuk, Chloropren-Kautschuk, Ethylen-Vinylacetat-Kautschuk, Polyurethan-Kautschuk, Guttapercha, Arylatkautschuk, Fluorkautschuk, Siliconkautschuk, Sulfidkautschuk oder Chlorsulfonyl-Polyäthylen-Kautschuk eingesetzt. Mit einem Compoundierextruder ist es natürlich auch möglich, eine Kombination von zwei oder mehreren der aufgeführten Kautschuke, oder eine Kombination aus einem oder mehreren Kautschuken mit einem oder mehreren anderen Polymeren zu verarbeiten.

Die Thermoplaste und Kautschuke können in reiner Form, als Mischungen untereinander oder mit anderen Thermoplasten und/oder Kautschuken oder als Mischungen mit üblichen Polymeradditiven eingesetzt werden.

Während der Verarbeitung von Thermoplasten und Kautschuken, insbesondere von Thermoplasten oder deren Blends, in einem Compoundierextruder, werden den Thermoplasten bzw. Kautschuken häufig Additive beigemengt. Diese können als Feststoffe, Flüssigkeiten oder Lösungen gemeinsam mit dem Polymer in den Extruder gegeben werden oder es wird wenigstens ein Teil der Additive oder alle Additive dem Extruder über einen Seitenstrom zugeführt.

Additive können einem Polymer vielfältige Eigenschaften verleihen. Beispiele für solche Additive sind Farbmittel, Pigmente, Verarbeitungshilfsmittel, Füllstoffe, Antioxidantien, Verstärkungsstoffe, UV-Absorber und Lichtstabilisatoren, Metalldesaktivatoren, Peroxidfänger, basische Stabilisatoren, Keimbildner, als Stabilisatoren oder Antioxidantien wirksame Benzofurane und Indolinone, Formtrennmittel, flammhemmende Additive, antistatische Mittel, Färbemittel oder Schmelzestabilisatoren. Beispielhaft für diese sind Ruß, Graphit, Kohlenstofffasern, Carbonfasern, Graphen, Kohlenstoffnanoröhrchen, Glimmer, Talkum, Ton, Titandioxid, Silikat, Glasfaser, Glaskugeln, Metallfasern, Naturfasern, Holzmehl oder ionische Flüssigkeiten.

Die Festlegung des Produkts hat großen Einfluss auf die Transportvorgänge im Extruder und damit auf den Druckverlauf, den Konzentrationsverlauf an Flüchtigen, also Stoffen, deren Dampfdruck höher ist als die Dampfdrücke des Produkts oder der Additive unter den jeweils herrschenden Bedingungen, den Mischverlauf, den Dispergierverlauf, den Temperaturverlauf oder den Grad der Produktschädigung längs des Extruders, da jedes Produkt unterschiedliche Stoffeigenschaften besitzt, insbesondere ein unterschiedliches viskoses Fließverhalten und eine unterschiedliche Sensitivität gegenüber Produktschädigungen. Im Falle eines Entgasungsextruders hängt dessen Entgasungsverhalten wesentlich von der Art der Polymerlösung ab. Leichtsieder, also Stoffe mit einem Siedepunkt bis maximal 100 °C, wie Hexan, Methylenchlorid oder Acrylnitril lassen sich leichter entgasen als Schwersieder, also Stoffe mit einem Siedepunkt über 100 °C, bevorzugt über 120 °C, wie Styrol, Chlorbenzol oder Ethylbenzol. Für die Auslegung eines Extruders ist eine möglichst gute Kenntnis der Reinstoffdaten und der Gemischstoffdaten der Polymere und Polymerlösungen notwendig. Als Stoffdaten sind insbesondere, aber ohne Anspruch auf Vollständigkeit, die Dichte, die Viskosität, die Wärmeleitfähigkeit und die Wärmekapazität aller Stoffe sowie die Verdampfungsenthalpien der Monomere und/oder Lösungsmittel und die Phasengleichgewichte der Monomere und / oder Lösungsmittel im Polymer zu nennen.

Mit der Wahl der Produktzugabe in Schritt (b) ist die Art und Weise gemeint, mit der das Produkt, also insbesondere das Polymer oder Polymergemisch, in die Eintrittszone eines Extruders gebracht wird. Dies kann im Entgasungsextruder auf verschiedene Arten erfolgen. In der EP 2 445 950 A1 ist gezeigt, dass die Polymerlösung über eine Zahnradpumpe in ein geschlossenes Gehäuse am Anfang eines Entgasungsextruders gepumpt wird. Der Eintrittsbereich kann in diesem Fall nicht als weiterer Entgasungsbereich genutzt werden. In der EP 2 445 950 A1 ist ferner gezeigt, dass der Abscheidebehälter eines vorangegangenen Verdampferapparates wie zum Beispiel Fallrohr oder Schaumverdampfer direkt mit dem Eintrittsbereich des Entgasungsextruders verbunden ist. Vorteilhafterweise wirkt dadurch der Eintrittsbereich bereits wie eine zusätzliche Entgasungszone.

In der EP 0 027 700 B1 ist die Kombination eines Flash-Verdampfers mit einem Entgasungsextruder zur Aufkonzentrierung der Lösungen von Olefinpolymerisaten offenbart. Vorteilhafterweise wirkt auch hier der Eintrittsbereich in den Entgasungsextruder wie eine zusätzliche Entgasungszone. In [1] auf den Seiten 194 bis 195 wird die Flashentgasung in einem Entgasungsextruder beschrieben. Bei der Flashentgasung wird die Polymerlösung zunächst unter Druck über den Siedepunkt der flüchtigen Komponente hinaus erhitzt und direkt über ein Entspannungsventil in den Entgasungsextruder entspannt. Es erfolgt eine spontane Trennung von Polymer und Lösungsmittel und das Lösungsmittel kann über eine Rückwärts- oder eine Vorwärtsentgasung aus dem Extruder entweichen. Bevorzugt wird die Polymerlösung so zugegeben, dass der Eintrittsbereich des Entgasungsextruders bereits als Entgasungszone wirkt.

Im Compoundierextruder wird das Produkt im Allgemeinen im festen Zustand dem Haupteinzug zugeführt. Es aber auch bekannt, dass das Produkt dem Extruder im flüssigen Zustand zugeführt werden. Ferner ist bekannt, dass ein Teil des Produkts über einen oder mehrere Seiteneinzüge dem Extruder zugeführt wird.

In Schritt (c) des Schrittes (I)(1) des erfindungsgemäßen Verfahrens werden die Verfahrenszonen und deren Reihenfolge im Extruder gewählt. Das Konzept von Verfahrenszonen ist dem Fachmann bekannt. Verfahrenszonen sind beispielsweise Einzugszonen wie Haupteinzugszone oder Seiteneinzugszonen, Aufschmelzzonen, Mischzonen, Dispergierzonen, Entgasungszonen und Druckaufbauzonen. In einer bevorzugten Ausführungsform des erfindungsgemäßen Verfahrens umfassen die Verfahrenszonen in Schritt (I)(1)(c):
bei einem Compoundierextruder mindestens eine Einzugszone, mindestens eine Aufschmelzzone, mindestens eine Mischzone und/oder mindestens eine Dispergierzone, optional mindestens eine Entgasungszone und mindestens eine Druckaufbauzone, wobei die Mischzone und/oder Dispergierzone mehrfach vorkommen können;
bei einem Entgasungsextruder mindestens eine Einzugszone, mindestens eine Mischzone und/oder mindestens eine Dispergierzone, mindestens eine Entgasungszone und mindestens eine Druckaufbauzone, wobei die Mischzone und/oder Dispergierzone und die Entgasungszone mehrfach vorkommen können.

Der Schritt (I)(1)(c) umfasst die Schritte (I.) Wahl der Gehäusekonfiguration und (II.) Wahl der Schneckenkonfiguration.

Moderne Extruder verfügen über ein modulares Baukastensystem, mit dem sowohl die Gehäuse als auch die Schnecken an die Erfordernisse der einzelnen Verfahrenszonen angepasst werden können. Offene Gehäuse können beispielsweise für die Materialzufuhr oder zum Entgasen genutzt werden. Geschlossene Gehäuse können beispielsweise zum Aufschmelzen, zum Mischen, zum Dispergieren oder zum Druckaufbau genutzt werden. Die Anordnung der modularen Gehäuse im Extruder wird als Gehäusekonfiguration bezeichnet.

Zur Bereitstellung von Schnecken werden modulare Schneckenelemente auf eine Kernwelle aufgezogen. Man unterscheidet bei den Schneckenelementen zwischen Förderelementen, Knetelementen und Mischelementen; diese Elemente sind beispielsweise in [1], Seiten 227 bis 248, ausführlich beschrieben. Dazu kommen Distanzscheiben oder Distanzhülsen zum Einsatz. Die Anordnung der modularen Schneckenelemente im Extruder wird als Schneckenkonfiguration bezeichnet.

Ein Förderelement zeichnet sich bekanntlich dadurch aus, dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Gehäuseinnendurchmessers, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Gehäuseinnendurchmessers.

Ein Knetelement zeichnet sich bekanntlich dadurch aus, dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Gehäuseinnendurchmessers. Der axiale Abstand zwischen zwei benachbarten Knetscheiben liegt bevorzugt im Bereich des 0,002-fachen bis 0,1-fachen des Gehäuseinnendurchmessers.

Mischelemente werden bekanntlich dadurch gebildet, dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Gehäuseinnendurchmessers und die axiale Länge der Elemente liegt bevorzugt im Bereich des 0,1-fachen bis 10-fachen des Gehäuseinnendurchmessers. Die Durchbrüche haben bevorzugt die Form einer u- oder v-förmigen Nut, die bevorzugt gegenfördernd oder achsparallel angeordnet sind.

Im optionalen Schritt (d) des Schrittes (I)(1) werden ein oder mehrere Schneckenelemente optimiert. Die Optimierung kann beispielsweise hinsichtlich Maximierung des Druckaufbaus oder hinsichtlich der Minimierung des Energieeintrags oder hinsichtlich Maximierung der Mischwirkung oder hinsichtlich Maximierung der Dispergierwirkung oder hinsichtlich Maximierung der Entgasungsleistung oder hinsichtlich einer Kombination der genannten Merkmale durchgeführt werden.

Bei Förderelementen können zur Optimierung beispielsweise die Gangzahl oder der Achsabstand oder die Steigung oder das Gehäusespiel oder das Schneckenspiel oder eine Kombination der genannten Merkmale variiert werden. Bei Mischelementen können zur Optimierung beispielsweise die Gangzahl oder der Achsabstand oder die Steigung oder das Gehäusespiel oder das Schneckenspiel oder die Form der Nuten oder die Anzahl der Nuten oder die Steigung der Nuten oder eine Kombination der genannten Merkmale variiert werden. Bei Knetelementen können zur Optimierung beispielsweise die Gangzahl oder der Achsabstand oder das Gehäusespiel oder das Schneckenspiel oder die Anzahl der Knetscheiben oder der Versatzwinkel zwischen den Knetscheiben oder die Dicke der Knetscheiben oder die Dicke der Nut zwischen den Knetscheiben oder eine Kombination der genannten Merkmale variiert werden.

Im Schritt (I)(1)(e) werden die Prozessparameter gewählt. Prozessparameter im Sinne der vorliegenden Erfindung sind Parameter, die das Extrusionsverfahren charakterisieren, wie beispielsweise die Eintrittstemperatur des Produkts, die Konzentration an Flüchtigen am Eintritt in den Extruder, die Heiz- bzw. Kühltemperaturen der Gehäuse, der Druck in der oder den Entgasungszonen, der Druck am Extruderaustritt, der Durchsatz durch den Extruder oder die Drehzahl des Extruders. Die Prozessparameter können optional in einem weiteren Schritt (f) noch angepasst werden.

Für einen Entgasungsextruder wird der Entgasungsprozess mit den Zielgrößen Restgehalt und/oder Austrittstemperatur und/oder Produktschädigung im Schritt (I)(1)(g) berechnet. Vorzugsweise wird dabei der Entgasungsprozess mit den Zielgrößen Restgehalt, Austrittstemperatur und Yellowness Index als Maß für die Produktschädigung berechnet.

Für einen Compoundierextruder wird der Compoundierprozess mit den Zielgrößen benötigtes Drehmoment und/oder Mischgüte und/oder Dispergiergüte und/oder Austrittstemperatur und/oder Produktschädigung im Schritt (I)(1)(g) berechnet. Vorzugsweise wird dabei der Compoundierprozess mit den Zielgrößen benötigtes Drehmoment, Mischgüte, Dispergiergüte und Austrittstemperatur berechnet.

Im Schritt (h) werden die Schritte (b), (c), (d), (f), (g) oder die Schritte (c), (d), (f), (g) oder die Schritte (d), (f), (g) oder die Schritte (f), (g) wiederholt, bis dies Zielgrößen im geforderten Bereich liegen.

Der im Entgasungsprozess geforderte Bereich für die jeweiligen Zielgrößen Restgehalt, Austrittstemperatur und Yellowness Index, vorzugsweise der Bereich für die Kombination Restgehalt, Austrittstemperatur und Yellowness Index wird vorzugsweise vor dem Beginn des Verfahrens festgelegt. Der im Compoundierprozess geforderte Bereich für die jeweiligen Zielgrößen Drehmoment, Mischgüte, Dispergiergüte und Austrittstemperatur, vorzugsweise der Bereich für die Kombination Drehmoment, Mischgüte, Dispergiergüte und Austrittstemperatur wird vorzugsweise vor dem Beginn des Verfahrens festgelegt. Der Fachmann wird vorzugsweise den geforderten Bereich der Zielgrößen auf das durchzuführende Verfahren, das zu erzeugende Produkt und den gewünschten Durchsatz des Extruders abstimmen. So kann der Zweck des jeweiligen Extruders besonders gut erreicht werden. Das Bestimmen einzelner Zielgrößen unabhängig von den anderen Zielgrößen bietet den Vorteil, dass der Fachmann den zu bestimmenden und im erfindungsgemäßen Verfahren herzustellenden Extruder auch auf seine speziellen Bedürfnisse auslegen kann. Beispielsweise kann es aus wirtschaftlichen Gründen richtig sein, auf einen besonders hohen Durchsatz hin auszulegen, und den Yellowness Index zu vernachlässigen. Auch der umgekehrte Fall, möglichst geringer Yellowness Index und ein geringerer Fokus auf Durchsatz kann in bestimmten Fällen sinnvoll sein.

Im Schritt (I)(2) des erfindungsgemäßen Verfahrens wird schließlich die detaillierte Auslegung des Extruders bestimmt und abschließend in Schritt (II) der in Schritt (I) berechnete Extruder gefertigt. Die Fertigung eines Extruders verläuft nach dem Fachmann bekannten und üblichen Herstellungsverfahren.

Bevorzugt umfasst der Schritt (I)(1) den Schritt (d), wobei der Schritt (d) bevorzugt die folgenden Schritte umfasst:
(I.) Wahl des Schneckenelementtyps und damit Festlegung der frei wählbaren Geometrieparameter;
(II.) Wahl des Bereichs der Geometrieparameter;
(III.) Wahl der zu untersuchenden Geometrievarianten;
(IV.) Berechnung der charakteristischen Kennzahlen (beispielsweise Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und/oder Dispergierverhalten von Gasen, Flüssigkeiten, Feststoffen) aller zu untersuchenden Geometrievarianten in Abhängigkeit von Stoffdaten und Prozessparametern;
(V.) Einbringen der charakteristischen Kennzahlen in ein Prognosewerkzeug;
(VI.) Wahl eines optimalen Schneckenelements mittels des Prognosewerkzeuges; und
(VII.) Wiederholen der Schritte (II.) bis (VI.) mit vergrößerten Bereich der Geometrieparameter, falls einer oder mehrere Geometrieparameter des optimalen Schneckenelements näher als 10% an der unteren Grenze des jeweiligen Parameterbereichs liegen oder näher als 10% an der oberen Grenze des jeweiligen Parameterbereichs liegen, wobei 100% die Differenz zwischen dem oberen Grenzwert und dem unteren Grenzwert des jeweiligen Parameterbereichs kennzeichnet.

Mit der Wahl des Schneckenelementtyps werden gleichzeitig die frei wählbaren Geometrieparameter festgelegt. Die Beschreibung der Geometrie von Profilen von Schneckenelementen (Schneckenprofilen) ist jedoch ein nicht triviales Problem, da es keine allgemeine Konstruktionsvorschrift beispielsweise für paarweise abschabende Schneckenelemente gibt. Somit existieren auch keine allgemein bekannten Parameter, die alle möglichen paarweise exakt abschabenden Schneckenextruder eindeutig beschreiben. Grundprinzipien, die der Geometrie von paarweise exakt abschabenden Schneckenprofilen zugrunde liegen, sind beispielsweise in der WO 2011/073181 A1, Seite 6, Zeilen 13 bis 33, und Seiten 25 bis 31, sowie in der korrespondierenden US2012245909A1, Abschnitte [0030] bis [0032] und [0145] bis [0192] beschrieben. Hierauf wird Bezug genommen und die Offenbarung der genannten Textstellen der WO 2011/073181 A1 und der US2012245909A1 per Referenz in die Beschreibung der vorliegenden Erfindung einbezogen.

Um nicht jede Extruderbaureihe getrennt betrachten zu müssen, werden die Geometrieparameter praktischer Weise in Form von dimensionslosen Geometrieparametern festgelegt. Eine geeignete Größe zur Entdimensionierung ist beispielsweise der Gehäuseinnendurchmesser eines Extruders. Damit kann die Geometrie eines Schneckenelements beispielsweise durch einen dimensionslosen Achsabstand, eine dimensionslose Steigung, ein dimensionsloses Gehäusespiel und/oder ein dimensionsloses Schneckenspiel beschrieben werden.

Stoffdaten, die das Produkt charakterisieren, sind beispielsweise die Dichte, die Wärmekapazität, die Wärmeleitfähigkeit, die Viskosität und andere. Diese Parameter für das Produkt sind häufig von Werten für die Prozessparameter abhängig. Beispielsweise ist die Viskosität abhängig von der Temperatur und der Scherrate.

Prozessparameter, die das Verfahren charakterisieren, sind beispielsweise Druck in den Entgasungszonen, Druck beim Austrag des Produkts, Heiztemperaturen der Extrudergehäuse, Drehzahl des Extruders und/oder Durchsatz des Extruders und andere.

Nachdem die Geometrieparameter durch Wahl des Schneckenelementtyps festgelegt sind, erfolgt die Festlegung des Bereichs der Geometrieparameter. Das heißt, es werden die Wertebereiche für die jeweiligen Geometrieparameter festgelegt, die den Simulationen zugrunde gelegt werden sollen. Der Wertebereich für den dimensionslosen Achsabstand kann beispielsweise zwischen 0,72 und 0,93 festgelegt werden. Durch den kleineren Wert werden besonders tiefgeschnittene Schneckenelemente mit kleinem Kammwinkel und durch den größeren Wert besonders flachgeschnittene Schneckenelemente mit großem Kammwinkel beschrieben. Der Wertebereich für die dimensionslose Steigung kann beispielsweise zwischen 0,3 und 4 festgelegt werden. Der kleinere Wert steht für Schneckenelemente extrem kurzer Steigung und der größere Wert für Schneckenelemente extrem großer Steigung. Die dimensionslosen Gehäuse- und Schneckenspiele können beispielsweise jeweils im Wertebereich zwischen 0,002 und 0,06 betrachtet werden.

Unter Geometrievarianten werden Wertekombinationen der Geometrieparameter verstanden, die den Bereich der Geometrieparameter möglichst umfangreich abdecken. Ziel ist es, Wertekombinationen zu finden, die den Bereich der Geometrieparameter so gut beschreiben, dass das Prognosewerkzeug, in das diese Wertekombinationen (zusammen mit den berechneten charakteristischen Kennzahlen) einfließen, Vorhersagen auch für andere Wertekombinationen treffen kann.

Hierzu werden zweckmäßigerweise die dem Fachmann aus der Versuchsplanung bekannten Methoden eingesetzt, wie beispielsweise Versuchsplanungsmethoden auf Basis statistischer Versuchsplanung wie Placket-Burmann Versuchspläne, zentral-zusammengesetzte Pläne (central composite), Box-Behnken Versuchspläne, D-optimal Pläne, Balancierte Blockpläne, Verfahren nach Shainin oder Taguchi und andere. Verfahren zur Versuchsplanung sind u.a. beschrieben in: Hans Bendemer, Optimale Versuchsplanung, Reihe Deutsche Taschenbücher, DTB, Band 23 (ISBN 3-87144-278-X) oder Wilhelm Kleppmann, Taschenbuch Versuchsplanung, Produkte und Prozesse optimieren, 2. Aufl. (ISBN 3-446-21615-4). Insbesondere sei hier auch auf die in WO 2003/075169 A2 beschriebene Methode hingewiesen.

Es ist möglich, dass die ausgewählten Wertekombinationen den Bereich der Geometrieparameter nicht ausreichend repräsentativ beschreiben. In diesem Fall kann es erforderlich sein, andere und/oder weitere Wertekombinationen auszuwählen.

Ist zu erwarten oder zeigt sich, dass verschiedene Produkte und/oder verschiedene Typen von Schneckenextrudern vollkommen unterschiedliche Verhalten in den Simulationen zeigen, kann es sinnvoll sein, verschiedene datenbasierte Modelle für verschiedene Typen von Produkten und/oder verschiedene Typen von Schneckenextrudern zu erzeugen. Diese verschiedenen Modelle können bei Bedarf später in einem einzigen Modell zusammengefasst werden.

Es ist beispielsweise sinnvoll, bei den Produkten zwischen solchen, die Newtonsches Fließverhalten zeigen, und solchen, die nicht-Newtonsch sind, zu unterscheiden und hierfür separate Simulationen durchzuführen und separate Modelle zu erzeugen.

Weiterhin ist es sinnvoll, auch verschiedene Typen von Schneckenelementen separat zu betrachten. Ein Typ von Schneckenelementen könnte beispielsweise durch zweigängige Gewindeelemente mit einem Erdmenger-Profil (siehe [1], Seiten 151 bis 168) gebildet werden, während ein anderer Typ beispielsweise durch eingängige Gewindeelemente mit reduziertem Kammwinkel, wie sie in der WO 2009/153003 A1 beschrieben sind, gebildet werden könnte.

Charakteristische Kennzahlen, die in Schritt (I)(1)(d)(IV.) berechnet werden, sind beispielsweise Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und/oder Dispergierverhalten von Gasen, Flüssigkeiten, Feststoffen. Dabei werden diese Kennzahlen von allen zu untersuchenden Geometrievarianten berechnet. Bevorzugt umfassen die Kennzahlen in Schritt (I)(1)(d)(IV.) eine oder mehrere der Größen Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und Dispergiereigenschaften von Gasen, Flüssigkeiten und Feststoffen. Damit kann eine präzisere Aussage über das Verhalten des Extruders unter den gewählten Prozessparametern in einem Verfahren zur Verarbeitung eines Produkts erzielt werden, was wiederum eine präzisere Herstellung des Extruders für seinen jeweiligen Zweck unter Berücksichtigung der Zielgrößen Restgehalt, Austrittstemperatur und Produktschädigung bei einem Entgasungsprozess oder der Zielgrößen benötigtes Drehmoment, Mischgüte, Dispergiergüte, Austrittstemperatur und Produktschädigung bei einem Compoundierprozess erlaubt.

Die berechneten charakteristischen Kennzahlen werden in ein Prognosewerkzeug eingebracht, welches die Optimierung eines Schneckenelements beispielsweise hinsichtlich Druckaufbau und/oder Leistungseintrag ermöglicht.

Durch die geeignete Kombination von Geometrieparametern, Stoffdaten und Prozessparametern lassen sich charakteristische dimensionslose Kennzahlen beispielsweise für den Druck, die Leistung und/oder den Durchsatz ermitteln. Die Benutzung der dimensionslosen Kennzahlen ermöglicht es, dass Betriebsverhalten eines Typs von Schneckenelementen hinsichtlich des zu verarbeitenden Produkts auf verschiedene Extrudergrößen zu übertragen. Durch die Kombination von dimensionslosen Geometrieparametern und charakteristischen dimensionslosen Kennzahlen lässt sich somit in einem Prognosewerkzeug ein Typ von Schneckenelementen für alle Extrudergrößen optimieren.

Das Prognosewerkzeug im erfindungsgemäßen Verfahren ist vorzugsweise ein optimiertes datenbasiertes Modell. Solche Prognosewerkzeuge sind ebenfalls in WO 2011/073181 A1 beschrieben, und zwar insbesondere in der Beschreibung auf Seite 5, Zeile 16 bis Seite 11, Zeile 11. Das Prognose-Werkzeug kann als Programmcode auf einem maschinenlesbaren Datenträger wie z.B. einer Diskette, einer CD, einer DVD, einer Festplatte, einem Memory-Stick oder dergleichen vorliegen. Das auf dem maschinenlesbaren Datenträger befindliche Prognose-Werkzeug kann in einen Arbeitsspeicher eines Computers gelesen werden. Mittels des Computers und der am Computer angeschlossenen Ein- und Ausgabegeräte kann ein Benutzer das Prognose-Werkzeug bedienen, d.h. Werte in das datenbasierte Modell eingeben und Ergebniskennzahlen berechnen. Vorzugsweise wird der Benutzer hierbei durch eine grafische Benutzeroberfläche unterstützt. Ebenso ist es möglich, das Prognose-Werkzeug als Mikrochip zu realisieren, das mit einer geeigneten Peripherie (Eingabe- und Ausgabegeräte) analog zu dem im Computer eingelesenen Programm bedient wird.

Besondere Vorteile im erfindungsgemäßen Verfahren ergeben sich, wenn das erfindungsgemäße Verfahren mit Datenbanken, in denen eine Vielzahl von existierenden bzw. möglichen Gehäusen, Schneckenelementen, Stoffdaten und/oder Prozessparametern vorhanden ist, verknüpft ist.

In einer bevorzugten Ausführungsform der vorliegenden Erfindung umfasst daher der Schritt (I)(1)(g) die folgenden Schritte:
i.Einlesen der Anzahl und der Art der zur Verfügung stehenden Gehäuse und Schneckenelemente einer Extruderbaureihe aus einer Datenbank,
ii.Einlesen der charakteristischen Kennzahlen der Schneckenelemente einer Extruderbaureihe aus einer Datenbank oder aus einem Prognosewerkzeug,
iii.Einlesen der Stoffdaten der Produkte aus einer Datenbank oder Bereitstellen der Stoffdaten über Stoffdatengleichungen zur Berechnung der Stoffdaten,
iv.Bestimmen der Intervalle mit konstanten geometrischen Bedingungen für die abschnittsweise Integration des Differentialgleichungssystems bezüglich Druck, Temperatur und optional Konzentration an Flüchtigen,
v. Bestimmen der Verfahrensintervalle,
vi. Setzen der bekannten Druckrandbedingungen in der Einzugszone, in den Entgasungszonen und am Ende der Druckaufbauzone,
vii. Iteratives Lösen des Differentialgleichungssystems bezüglich Druck, Temperatur und optional Konzentration an Flüchtigen längs des Extruders in jedem Geometrieintervall aller Verfahrensintervalle unter Berücksichtigung des Füllgrades der einzelnen Geometrieintervalle.

Mit einer Datenbank ist im Sinne der vorliegenden Erfindung eine ASCII-Datei, eine Excel-Tabelle oder aber insbesondere eine Datenbankanwendung gemeint. In dieser Datenbank oder auch mehreren Datenbanken sind die zur Verfügung stehenden Gehäuse einschließlich ihrer Geometrieparameter, Schneckenelemente einschließlich ihrer Geometrieparameter, charakteristischen Kennzahlen der Schneckenelemente und Stoffdaten abgespeichert. Hierbei ist es sinnvoll, eine möglichst große Zahl dieser Gehäuse, Schneckenelemente, Kennzahlen und Stoffdaten in entsprechenden Datenbanken bereit zu halten, um zum ersten eine möglichst große Variabilität zur Verfügung zu haben, und zum zweiten um eine optimale Auslegung bezüglich der Zielgrößen Restgehalt, Austrittstemperatur und Produktschädigung bei einem Entgasungsprozess oder der Zielgrößen benötigtes Drehmoment, Mischgüte, Dispergiergüte, Austrittstemperatur und Produktschädigung bei einem Compoundierprozess zu ermöglichen.

Das prozesstechnische Verhalten jedes Schneckenelements wird durch charakteristische Kennzahlen beschrieben. Charakteristische Kennzahlen eines Schneckenelements sind unter anderem der Eigendurchsatz, das Druckaufbauvermögen, der Energieeintrag im vollgefüllten oder teilgefüllten Zustand, wie in [1], Seiten 131 bis 136, beschrieben.

Für die Auslegung eines Extrusionsprozesses, insbesondere eines Entgasungsprozesses oder eines Compoundierprozesses, werden diejenigen Stoffdaten des Produkts benötigt, die für dessen Verarbeitung in einem Extrusionsprozess, insbesondere in einem Entgasungsprozess oder in einem Compoundierprozess, relevant sein können. Dieses sind beispielsweise die Reinstoffdaten eines Polymers wie Viskosität, Wärmeleitfähigkeit, Wärmekapazität und Dichte. Alle genannten Stoffgrößen hängen von der Temperatur ab, die Viskosität zusätzlich von der Scherrate. Die entsprechende Datenbank enthält bevorzugt auch eine Vielzahl von diesen Daten für eine breite Varianz von Temperaturen und bei der Viskosität zusätzlich für eine breite Varianz von Scherraten. Alternativ zur Datenbank können Stoffdatengleichungen verwendet werden, die die Stoffdaten in Abhängigkeit von der Temperatur und bei der Viskosität zusätzlich von der Scherrate berechnen. Weiterhin sind nicht nur die genannten Reinstoffdaten für eingesetzte Polymere, sondern auch die Reinstoffdaten für Monomere und Lösungsmittel und deren Gemische mit den Polymeren in den entsprechenden Datenbanken oder in Form von Stoffdatengleichungen abgelegt. Typische temperaturabhängige Reinstoffdaten für Monomere und Lösungsmittel sind Viskosität, Wärmeleitfähigkeit, Wärmekapazität und Dichte sowohl für die flüssige Phase als auch die gasförmige Phase. Für den Phasenübergang in die gasförmige Phase wird weiterhin die temperaturabhängige Verdampfungsenthalpie der Monomere und Lösungsmittel benötigt. Typische temperaturabhängige Stoffdaten für Gemische aus Monomeren und Lösungsmitteln mit den Polymeren sind Viskosität, Wärmeleitfähigkeit, Wärmekapazität und Dichte, wobei die Viskosität zusätzlich von der Scherrate abhängt. Bei den Gemischen ist ferner das temperatur- und druckabhängige Phasengleichgewicht zwischen den Monomeren und Lösungsmitteln und den Polymeren von Bedeutung.

Sind die entsprechenden Daten aus der korrespondierenden Datenbank in den Schritten i. bis iii. eingelesen, wird der Extruder in Schritt iv. in Intervalle mit konstanten geometrischen Bedingungen sowohl bezüglich der Gehäuse als auch bezüglich der Schneckenelemente unterteilt, um eine intervallweise Integration des Differentialgleichungssystems bezüglich Druck, Temperatur und optional Konzentration an Flüchtigen zu ermöglichen. Ein Intervall mit konstanten geometrischen Bedingungen wird im Sinne der vorliegenden Erfindung im Folgenden auch als Geometrieintervall bezeichnet. Eine geometrische Intervallgrenze liegt immer vor, wenn sich die Geometrie des Extruders längs der Achse ändert. Unter einer geometrischen Intervallgrenze in Schritt iv. werden im Sinne der vorliegenden Erfindung das Ende eines Schneckenelementes, das Ende eines Gehäuses, der Beginn einer Öffnung im Gehäuse und das Ende einer Öffnung im Gehäuse verstanden.

Nach dem Ermitteln der geometrischen Intervalle in Schritt iv. werden in Schritt v. die Verfahrensintervalle bestimmt. Es wird zwischen einem Eintrittsintervall, einem Misch- und Dispergierintervall, einem Aufschmelzintervall, einem Entgasungsintervall und einem Druckaufbauintervall unterschieden. Das Eintrittsintervall wird der Länge nach durch die Länge der Öffnung des Eintrittsgehäuses bestimmt. In diesem Intervall sind alle Schneckenelemente teilgefüllt. Ein Misch- und Dispergierintervall liegt vor, wenn in einem Bereich mit geschlossenen Gehäusen ein oder mehrere Schneckenelemente, die druckverbrauchend wirken, einem oder mehreren Schneckenelementen nachfolgen, die druckaufbauend wirken. Die druckverbrauchenden Schneckenelemente sind vollgefüllt. Der Bereich mit den druckaufbauenden Schneckenelementen ist zu Beginn teilgefüllt und zum Ende vollgefüllt. Der genaue Umschlagpunkt zwischen Teilfüllung und Vollfüllung ergibt sich erst aus Schritt vii. Ein Misch- und Dispergierintervall wird abweichend als Aufschmelzintervall bezeichnet, wenn es direkt einem Eintrittsintervall folgt, in dem als Produkt ein oder mehrere feste Polymere zugeführt werden. Ein Entgasungsintervall liegt vor, wenn in einem Bereich ein offener Gehäusebereich einem geschlossenem Gehäusebereich nachfolgt und sich in beiden Gehäusebereichen druckaufbauende Schneckenelemente befinden. In diesem Intervall sind alle Schneckenelemente teilgefüllt. Ein Druckaufbauintervall liegt am Ende des Extruders vor. Es beginnt nach dem letzten druckverbrauchenden Schneckenelement und endet am Ende des Extruders. Das Intervall enthält nur druckaufbauende Schneckenelemente und ist zu Beginn teilgefüllt und zum Ende vollgefüllt. Der genaue Umschlagpunkt zwischen Teilfüllung und Vollfüllung ergibt sich erst aus Schritt vii.

In Schritt vi. werden dann die bekannten Druckrandbedingungen in der Einzugszone, in den Entgasungszonen und am Ende der Druckaufbauzone gesetzt.

Da die Einzugszone ein offenes Gehäuse besitzt und die Extruder in dieser Zone nur teilgefüllt sind, kann der gewünschte Druck in der Einzugszone von außen eingestellt werden. Bei einem Entgasungsextruder kann der Druck in der Einzugszone je nach Menge und Art der Monomere und Lösungsmittel sowie der vorliegenden Temperatur zwischen einem Vakuum von 0,1 mbar und einem Überdruck von 20 bar, bevorzugt zwischen einem Vakuum von 1 mbar und einem Überdruck von 5 bar liegen. Bei einem Compoundierextruder erfolgt der Einzug bevorzugt bei Umgebungsdruck. Bei pulverförmigen Produkten ist bekannt das der Einzug auch unter einem leichten Vakuum erfolgen kann.

Da auch die Entgasungszonen jeweils ein offenes Gehäuse besitzen und die Extruder in diesen Zonen nur teilgefüllt sind, kann der gewünschte Druck in den Entgasungszonen von außen eingestellt werden. Bei einem Entgasungsextruder kann der Druck in der Entgasungszone je nach Menge und Art der Monomere und Lösungsmittel sowie der vorliegenden Temperatur zwischen einem Vakuum von 0,1 mbar und einem Überdruck von 20 bar, bevorzugt zwischen einem Vakuum von 1 mbar und einem Überdruck von 5 bar liegen. Falls der Entgasungsextruder mehrere Entgasungszonen aufweist, ist der Druck einer nachfolgenden Entgasungszone bevorzugt kleiner oder gleich dem Druck der vorangegangenen Entgasungszone, besonders bevorzugt kleiner dem Druck der vorangegangenen Entgasungszone. Der Druck einer einer Einzugszone nachfolgenden Entgasungszone ist bevorzugt kleiner oder gleich dem Druck der Einzugszone, besonders bevorzugt kleiner dem Druck der Einzugszone. Bei einem Compoundierextruder kann der Druck in der Entgasungszone je nach Menge und Art der Monomere und Lösungsmittel sowie der vorliegenden Temperatur zwischen einem Vakuum von 1 mbar und einem Überdruck von 2 bar, bevorzugt zwischen einem Vakuum von 100 mbar und Umgebungsdruck liegen.

Die Druckaufbauzone befindet sich in einem geschlossenen Gehäuse und stellt den notwendigen Druckaufbau zur Verfügung, damit das Produkt den Extruder wieder verlassen kann. Der Druckaufbau ist notwendig, um Druckverluste durch einen nachfolgenden Filter und/oder eine nachfolgende Granulierung (Stranggranulierung oder Unterwassergranulierung) entgegenzuwirken. Da die Druckverluste eines Filters und/oder einer Granulierung bekannt sind oder zumindest abgeschätzt werden können, ist auch der benötigte Druckaufbau in einer Druckaufbauzone bekannt.

Im letzten Schritt vii. wird das Differentialgleichungssystem bezüglich Druck, Temperatur und optional Konzentration an Flüchtigen in jedem Verfahrensintervalle längs des Extruders gelöst. Das Differentialgleichungssystem bezüglich Druck, Temperatur und optional Konzentration an Flüchtigen wird in jedem Geometrieintervall längs der Verfahrensintervalle gelöst. Misch- und Dispergierintervalle, Aufschmelzintervalle sowie das Druckaufbauintervall müssen hierbei iterativ berechnet werden, da der Umschlagpunkt zwischen Teilfüllung und Vollfüllung zu Beginn der Berechnung noch nicht bekannt ist.

Für einen Extruder kann ein Zielprofil festgelegt werden. Die Festlegung eines solchen Zielprofils umfasst die Aufstellung von Regeln für alle Ergebniskennzahlen, beispielsweise eine maximale Temperatur des Produkts am Austritt aus dem Extruder oder ein maximaler Restgehalt an Monomeren und / oder Lösungsmitteln am Austritt aus dem Extruder. Nach Festlegung des Produkts in Schritt (_{I})(1)(a) werden die Schritte (I)(1)(b), (I)(1)(c), (I)(1)(e) und (I)(1)(g) für eine Wertekombination durchgeführt. Unter der Wertekombination wird in Sinne der vorliegenden Erfindung eine spezifische Art der Zugabe des Produkts, eine spezifische Gehäusekonfiguration, eine spezifische Schneckenkonfiguration und ein spezifischer Satz an Prozessparametern verstanden.

Mit Hilfe der oben beschriebenen daten- bzw. datenbankbasierten Verfahrensschritte (i) bis (vii) kann somit die Suche nach denjenigen Wertekombinationen, die das vorgegebene Zielprofil erfüllen oder diesem in einer vorher festgelegten Näherung nahe kommen, in verbesserter Art und Weise durchgeführt werden. Mit Hilfe des datenbasierten Modells können für eine Vielzahl von Wertekombinationen (Inputparameter) die Ergebniskennzahlen (Outputparameter) in sehr kurzer Zeit berechnet werden, so dass eine gezielte Variation der Werte für die Inputparameter und Vergleich der Werte für die Outputparameter mit dem Zielprofil zu den gesuchten Inputparametern führt, die das Zielprofil erfüllen oder diesem am nächsten kommen. Diese Suche nach den "optimalen" Wertekombinationen zur Erzielung eines vorgegebenen Profils kann durch bekannte Optimierungsverfahren wie beispielsweise Monte-Carlo-Methoden, Evolutionäre Optimierung (genetische Algorithmen), Simulated Annealing oder anderen unterstützt werden. Eine Übersicht über Optimierungsverfahren gibt z.B. das Buch von M. Berthold et al., Intelligent Data Analysis, Springer, Heidelberg 1999.

Bevorzugt umfassen die charakteristischen Kennzahlen in Schritt (I)(1)(g)ii. eine oder mehrere der Größen Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und Dispergiereigenschaften von Gasen, Flüssigkeiten und Feststoffen.

Weiter bevorzugt umfassen die Verfahrensintervalle in Schritt (I)(1)(g)v. mindestens ein Eintrittsintervall, bei Compoundierextrudern mindestens ein Aufschmelzintervall, mindestens ein Misch- oder Dispergierintervall, bei Entgasungsextrudern mindestens ein Entgasungsintervall und mindestens ein Druckaufbauintervall.

In einer weiter bevorzugten Ausführungsform umfasst der Schritt (I)(1)(g) zusätzlich noch die Schritte
viii. Speichern der Rechenergebnisse und
ix. Optional bildliche oder graphische Darstellung der Ergebnisse auf einem Bildschirm oder auf einem Printmedium oder in holographischer Form.

Vorzugsweise erfolgt auch die Ausgabe der berechneten Ergebnisparameter und die Abweichung der berechneten Ergebnisparameter von dem Zielprofil. Die Ausgabe kann in Form von Zahlen und/oder Grafiken an einem Computerbildschirm oder einem Drucker erfolgen. Mit dem Speichern der Rechenergebnisse ist allgemein das Abspeichern der durch Schritt (I) generierten Daten in elektronischer Form auf einem entsprechenden Speichermedium wie etwa einer Festplatte, einer CD oder einer DVD gemeint. Hierunter fällt auch das Generieren von Daten und deren Abspeichern in Datenbanken.

Vorzugsweise umfasst der Schritt (2) des Schrittes (I) des erfindungsgemäßen Verfahrens die folgenden Schritte:
(a) Wahl der Länge der Schneckenelemente,
(b) Wahl des Schneckenprofils der Schneckenelemente,
(c) im Falle eines Entgasungsextruders Wahl des Lagerzonenkonzepts
(d) Berechnung des Entgasungsprozesses mit den Zielgrößen Restgehalt und/oder Austrittstemperatur und/oder Produktschädigung oder Berechnung des Compoundierprozesses mit den Zielgrößen benötigtes Drehmoment und/oder Mischgüte und/oder Dispergiergüte und/oder Austrittstemperatur, umfassend die Schritte (1)(g)(i.) bis (1)(g)(ix.),
(e) Wiederholen der Schritte (a), (b), (c), (d) oder der Schritte (b), (c), (d) oder der Schritte (c), (d) oder des Schritts (d) bis die Zielgrößen im geforderten Bereich liegen,
(f) Erstellen der Gehäuse- und Schneckenelementliste,
(g) Erstellen der technischen Zeichnungen für Gehäuse und Schneckenelemente.

Bei großen Extrudern besteht die Gefahr, dass sich die Welle durch ihr Eigengewicht oder durch Strömungskräfte so stark verbiegt, dass ein oder mehrere Schneckenelemente das Gehäuse berühren. Aufgrund der Drehbewegung führt dies zu einem starken Verschleiß der Schneckenelemente und der Gehäuse sowie zu einer unerwünschten Graufärbung der Polymere. Eine Möglichkeit, den Verschleiß zu verringern besteht darin, alle Schneckenelemente und alle Gehäuse mit besonders verschleißfesten Werkstoffen auszurüsten. Da derartige Werkstoffe sehr teuer und schwer zu verarbeiten sind, hat dies den Nachteil sehr hoher Herstellkosten für den Extruder.

Eine bevorzugte Möglichkeit, den Verschleiß zu verringern, besteht darin, den Extruder mit einer oder mehreren Lagerzonen zu versehen. In den Lagerzonen ist erstens der Gehäuseinnendurchmesser verringert und zweitens die Gehäusewandung und die Kämme der Schneckenelemente mit verschleißfesten Werkstoffen ausgerüstet. Durch die Verringerung des Gehäuseinnendurchmessers in den Lagerzonen können nur noch die besonders verschleißfesten Schneckenelemente das Gehäuse berühren. Die Anordnung der Lagerzonen innerhalb des Extruders wird im Sinne dieser Erfindung im Folgenden als Lagerzonenkonzept bezeichnet. Der Vorteil des Lagerzonenkonzepts liegt darin, dass nur zwischen 5 und 50% des Extruders, bevorzugt zwischen 15 und 40% des Extruders mit verschleißfesten Werkstoffen ausgestattet werden müssen.

Auf diese Art und Weise wird eine für den vorgegebenen Anwendungsfall optimierte Geometrie des Extruders, insbesondere der Schneckenelemente, ermittelt. Diese am Computer berechnete Geometrie wird dann in Schritt (II) des erfindungsgemäßen Verfahrens zur Fertigung des realen Extruders verwendet. Dabei werden vorzugsweise die Geometriedaten des Extruders in ein Format überführt, welches dann direkt einer CNC-Werkzeugmaschine (CNC = Computerized Numerical Control) zur Erzeugung der Schneckenelemente zugeführt werden kann. Solche Formate sind im Stand der Technik üblich und dem Fachmann bekannt.

Nachdem die Geometrien auf die beschriebene Weise erzeugt worden sind, können die Schneckenextruder z.B. mit einer Fräsmaschine, einer Drehmaschine oder einer Wirbelmaschine erzeugt werden. Bevorzugte Materialien zur Erzeugung der Schneckenextruder sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, ingenieurkeramische Werkstoffe wie z.B. Zirkonoxid oder Siliziumcarbid.

Vorzugsweise ist der Extruder der vorliegenden Erfindung ausgewählt aus der Gruppe bestehend aus Einschneckenextrudern, Doppelschneckenextrudern, Mehrwellenextrudern, Planetwalzenextrudern, Ringextrudern und großvolumigen Knetern, bevorzugt aus der Gruppe bestehend aus gleichläufigen, selbstreinigenden Doppelschneckenextrudern, gegenläufigen, selbstreinigenden Doppelschneckenextrudern, gegenläufigen, ineinandergreifenden Doppelschneckenextrudern, gleichläufigen, ineinandergreifenden Doppelschneckenextrudern, gegenläufigen, tangierenden Doppelschneckenextrudern, gleichläufigen, tangierenden Doppelschneckenextrudern.

Ein weiterer Gegenstand der vorliegenden Erfindung ist ein Extruder, vorzugsweise ein Doppelschneckenextruder, erhältlich nach dem Verfahren gemäß der vorliegenden Erfindung.

### Beschreibung der Figuren

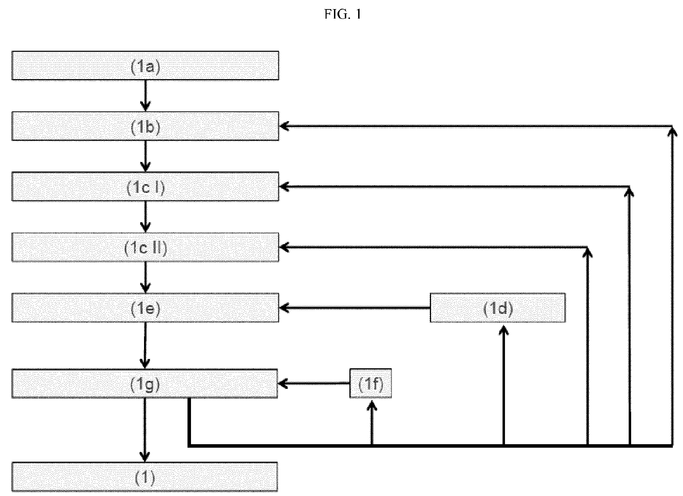

Figur 1 zeigt ein Fließbild, dass den Ablauf des Schrittes (I)(1) des Verfahrens zur Herstellung eines Extruders gemäß der vorliegenden Erfindung für einen Entgasungsextruder beispielhaft verdeutlicht. Zu dieser Ermittlung der grundsätzlichen Auslegung des Entgasungsextruders wird zunächst in Schritt (a) das Produkt festgelegt und danach in Schritt (b) die Art der Produktzugabe gewählt. Schritt (c), in welchem die Wahl der Verfahrenszonen und deren Reihenfolge im Entgasungsextruder erfolgen, umfasst die Teilschritte (c I) und (c II). In Teilschritt (c I) wird die Gehäusekonfiguration gewählt und in Teilschritt (c II) die Schneckenkonfiguration. Nach der Wahl der Prozessparameter in Schritt (e) werden in Schritt (g) die Ergebnisse berechnet. Diese umfassen den Entgasungsprozess mit den Zielgrößen Restgehalt und/oder Austrittstemperatur und/oder Produktschädigung wie oben beschrieben. Optional können dann in Schritt (d) einzelne Schneckenelemente optimiert werden. Optional können in einem Schritt (f) die Prozessparameter angepasst werden. Die einzelnen Schritte (b) bis (g), wahlweise inklusive (d) und (f) können alle oder teilweise erneut durchgeführt werden, bis die Zielgrößen sich im geforderten Bereich bewegen. Auf diese Art und Weise kann die grundsätzliche Auslegung (1) des Entgasungsextruders ermittelt werden.

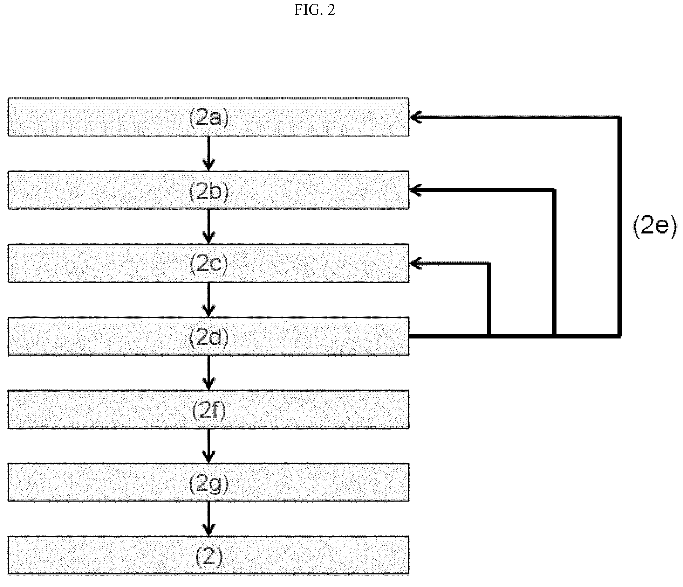

In Figur 2 sind ebenfalls beispielhaft in einem Fließbild gemäß einer bevorzugten Ausführungsform der vorliegenden Erfindung die Teilschritte (a) bis (g) des Schrittes (I)(2), hier die Ermittlung der detaillierten Auslegung eines Entgasungsextruders, des Schrittes (I) des Verfahrens gemäß der vorliegenden Erfindung dargestellt. In Schritt (a) wird die Länge der Schneckenelemente und in Schritt (b) das Schneckenprofil der Schneckenelemente gewählt. Anschließend wird das Lagerzonenkonzept in Schritt (c) gewählt. Damit wird in Schritt (d) eine Berechnung des Entgasungsprozesses mit den Zielgrößen Restgehalt und/oder Austrittstemperatur und/oder Produktschädigung vorgenommen. Es wird somit eine Neuberechnung der in Schritt (1) des erfindungsgemäßen Verfahrens ermittelten Grundauslegung des Extruders vorgenommen. Dabei werden im Schritt (e) die Schritte (a), (b), (c) und (d) oder die Schritte (b), (c), (d) oder die Schritte (c) und (d) solange wiederholt, bis die Zielgrößen sich im geforderten Bereich befinden. Anschließend wird in Schritt (f) eine Gehäuse- und Schneckenelementliste sowie im Schritt (g) die technischen Zeichnungen für Gehäuse und Schneckenelemente erstellt.

### Bezugszeichenliste:

- (1a): Festlegung des zu extrudierenden Produkts
- (1b): Wahl der Zugabe des zu extrudierenden Produkts
- (1c I): Wahl der Gehäusekonfiguration
- (1c II): Wahl der Schneckenkonfiguration
- (1d): Optimierung einzelner Schneckenelemente
- (1e): Wahl der Prozessparameter
- (1f): Anpassen der Prozessparameter
- (1g): Berechnung des Entgasungsprozesses
- (1): Grundauslegung des Extruders als Ergebnis des Rechenprozesses
- (2a): Wahl der Länge der Schneckenelemente
- (2b): Wahl des Schneckenprofils der Schneckenelemente
- (2c): Wahl des Lagerkonzepts
- (2d): Berechnung des Entgasungsprozesses entsprechend den Zielgrößen
- (2e): Wiederholen der Schritte (a), (b), (c), (d) oder der Schritte (b), (c), (d) oder der Schritte (c), (d) oder des Schritts (d) bis Zielgrößen im geforderten Bereich
- (2f): Erstellen der Gehäuse- und Schneckenelementliste
- (2g): Erstellen der technischen Zeichnungen für Gehäuse und Schneckenelemente
- (2): detaillierte Auslegung als Ergebnis des Rechenprozesses

## Patentansprüche

1. Verfahren zur Herstellung eines Extruders mit mindestens einer Welle, umfassend die Schritte:
(I) Berechnung des Extruders,
(II) Fertigung des in Schritt (I) berechneten Extruders,
wobei Schritt (I) ein mathematisches Optimierungsverfahren umfasst, umfassend die folgenden Schritte:
(1) Grundauslegung des Extruders, umfassend die folgenden Schritte:
(a) Festlegung des zu extrudierenden Produkts,
(b) Wahl der Zugabe des zu extrudierenden Produkts;
(c) Wahl der Verfahrenszonen und deren Reihenfolge im Extruder, umfassend die folgenden Schritte:
(I.) Wahl der Gehäusekonfiguration,
(II.) Wahl der Schneckenkonfiguration;
(d) Optional Optimierung einzelner Schneckenelemente,
(e) Wahl der Prozessparameter,
(f) Optional Anpassen der Prozessparameter,
(g) Berechnung des eines Entgasungsprozesses mit den Zielgrößen Restgehalt und/oder Austrittstemperatur und/oder Produktschädigung oder Berechnung eines Compoundierprozesses mit den Zielgrößen benötigtes Drehmoment und/oder Mischgüte und/oder Dispergiergüte und/oder Austrittstemperatur und/oder Produktschädigung, bevorzugt mittels eines computergestützten Rechenprogramms,
(h) Wiederholen der Schritte (b), (c), (d), (f), (g) oder der Schritte (c), (d), (f), (g) oder der Schritte (d), (f), (g) oder der Schritte (f), (g) bis die Zielgrößen im geforderten Bereich liegen,
(2) Detaillierte Auslegung des Extruders.

2. Verfahren gemäß Anspruch 1, wobei es sich bei dem Extruder um einen Compoundierextruder oder einen Entgasungsextruder handelt und die Verfahrenszonen in Schritt (I)(1)(c) mindestens umfassen:
bei einem Compoundierextruder mindestens eine Einzugszone, mindestens eine Aufschmelzzone, mindestens eine Mischzone und/oder mindestens eine Dispergierzone, optional mindestens eine Entgasungszone und mindestens eine Druckaufbauzone, wobei die Mischzone und/oder Dispergierzone mehrfach vorkommen können;
bei einem Entgasungsextruder mindestens eine Einzugszone, mindestens eine Mischzone und/oder mindestens eine Dispergierzone, mindestens eine Entgasungszone und mindestens eine Druckaufbauzone, wobei die Mischzone und/oder Dispergierzone und die Entgasungszone mehrfach vorkommen können.

3. Verfahren gemäß Anspruch 1 oder 2, wobei der Schritt (I)(1) den Schritt (d) umfasst, wobei Schritt (d) die folgenden Schritte umfasst:
(I.) Wahl des Schneckenelementtyps und damit Festlegung der frei wählbaren Geometrieparameter;
(II.) Wahl des Bereichs der Geometrieparameter;
(III.) Wahl der zu untersuchenden Geometrievarianten;
(IV.) Berechnung der charakteristischen Kennzahlen (Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und/oder Dispergierverhalten von Gasen, Flüssigkeiten, Feststoffen) aller zu untersuchenden Geometrievarianten in Abhängigkeit von Stoffdaten und Prozessparametern;
(V.) Einbringen der charakteristischen Kennzahlen in ein Prognosewerkzeug;
(VI.) Wahl eines optimalen Schneckenelements mittels des Prognosewerkzeuges; und
(VII.) Wiederholen der Schritte (II.) bis (VI.) mit vergrößerten Bereich der Geometrieparameter, falls einer oder mehrere Geometrieparameter des optimalen Schneckenelements näher als 10% an der unteren Grenze des jeweiligen Parameterbereichs liegen oder näher als 10% an der oberen Grenze des jeweiligen Parameterbereichs liegen, wobei 100% die Differenz zwischen dem oberen Grenzwert und dem unteren Grenzwert des jeweiligen Parameterbereichs kennzeichnet.

4. Verfahren gemäß Anspruch 3, wobei die Kennzahlen in Schritt (I)(1)(d)(IV.) eine oder mehrere der Größen Kammwinkel, freie Querschnittsfläche, Schneckenoberfläche, Gehäuseoberfläche, Eigendurchsatz, Druckaufbau, Wirkungsgrad des Druckaufbaus, Leistungseintrag bei vollständiger Füllung mit Produkt, Leistungseintrag bei teilweiser Füllung mit Produkt, mittlere Verweilzeit, Verweilzeitverteilung, Mischverhalten und Dispergierverhalten von Gasen, Flüssigkeiten, Feststoffen umfassen.

5. Verfahren gemäß mindestens einem der vorherigen Ansprüche, wobei der Schritt (I)(1)(g) die folgenden Schritte umfasst:
i.Einlesen der zur Verfügung stehenden Gehäuse und Schneckenelemente einer Extruderbaureihe aus einer Datenbank,
ii.Einlesen der charakteristischen Kennzahlen der Schneckenelemente einer Extruderbaureihe aus einer Datenbank oder aus einem Prognosewerkzeug,
iii.Einlesen der Stoffdaten aus einer Datenbank oder Bereitstellen der Stoffdaten über Stoffdatengleichungen zur Berechnung der Stoffdaten,
iv.Bestimmen der Intervalle mit konstanten geometrischen Bedingungen für die abschnittsweise Integration des Differentialgleichungssystems bezüglich Druck, Temperatur und optional Konzentration an Flüchtigen,
v. Bestimmen der Verfahrensintervalle,
vi. Setzen der bekannten Druckrandbedingungen in der Einzugszone, in den Entgasungszonen und am Ende der Druckaufbauzone,
vii.Iteratives Lösen des Differentialgleichungssystems bezüglich Druck, Temperatur und optional Konzentration an Flüchtigen längs des Extruders in jedem Geometrieintervall aller Verfahrensintervalle unter Berücksichtigung des Füllgrades der einzelnen Geometrieintervalle.

6. Verfahren gemäß Anspruch 5, wobei die charakteristischen Kennzahlen in Schritt (I)(1)(g)ii. eine oder mehrere der Größen Eigendurchsatz, Druckaufbau, Leistungseintrag, Mischverhalten und Dispergierverhalten von Gasen, Flüssigkeiten, Feststoffen umfassen.

7. Verfahren gemäß Anspruch 5, wobei die Verfahrensintervalle in Schritt (I)(1)(g)v. mindestens ein Einzugsintervall, bei Compoundierextrudern mindestens ein Aufschmelzintervall, mindestens ein Misch- oder Dispergierintervall, bei Entgasungsextrudern mindestens ein Entgasungsintervall, und mindestens ein Druckaufbauintervall umfassen.

8. Verfahren gemäß einem der Ansprüche 5 bis 7, weiter umfassend die Schritte
viii. Speichern der Rechenergebnisse
ix. Optional bildliche oder grafische Darstellung der Ergebnisse auf einem Bildschirm oder auf einem Papier oder in holographischer Form.

9. Verfahren gemäß mindestens einem der vorherigen Ansprüche, wobei der Schritt (2) des Schrittes (I) die folgenden Schritte umfasst:
(a) Wahl der Länge der Schneckenelemente
(b) Wahl des Schneckenprofils der Schneckenelemente
(c) im Falle eines Entgasungsextruders Wahl eines Lagerzonenkonzepts
(d) Berechnung des Entgasungsprozesses mit den Zielgrößen Restgehalt und/oder Austrittstemperatur und/oder Produktschädigung oder Berechnung des Compoundierprozesses mit den Zielgrößen benötigtes Drehmoment und/oder Mischgüte und/oder Dispergiergüte und/oder Austrittstemperatur, umfassend die Schritte (1)(g)(i.) bis (1)(g)(ix.)
(e) Wiederholen der Schritte (a), (b), (c), (d) oder der Schritte (b), (c), (d) oder der Schritte (c), (d) oder des Schritts (d) bis Zielgrößen im geforderten Bereich
(f) Erstellen der Gehäuse- und Schneckenelementliste
(g) Erstellen der technischen Zeichnungen für Gehäuse und Schneckenelemente.

10. Verfahren gemäß mindestens einem der vorherigen Ansprüche, wobei das Lagerzonenkonzept die Anordnung der Lagerzonen innerhalb des Extruders umfasst.

11. Verfahren gemäß mindestens einem der vorherigen Ansprüche, wobei der Extruder ausgewählt ist aus der Gruppe bestehend aus Einschneckenextrudern, Doppelschneckenextrudern, Mehrwellenextrudern, Planetwalzenextrudern, Ringextrudern und großvolumiger Kneter.

12. Verfahren gemäß Anspruch 11, wobei der Extruder ein Doppelschneckenextruder ist, ausgewählt aus der Gruppe bestehend aus gleichläufigen, selbstreinigenden Doppelschneckenextrudern, gegenläufigen, selbstreinigenden Doppelschneckenextrudern, gegenläufigen, ineinandergreifenden Doppelschneckenextrudern, gleichläufigen, ineinandergreifenden Doppelschneckenextrudern, gegenläufigen, tangierenden Doppelschneckenextrudern, gleichläufigen, tangierenden Doppelschneckenextrudern.

13. Extruder, erhältlich durch ein Verfahren gemäß mindestens einem der Ansprüche 1 bis 12.

14. Extruder gemäß Anspruch 13, wobei der Extruder ein Doppelschneckenextruder ist.
